# FASCICULE DE BREVET EUROPEEN

(11) **EP 1 254 834 B1**
(45) Date de publication et mention de la délivrance du brevet: **22.11.2006**
(21) Numéro de dépôt: 02291074.9
(22) Date de dépôt: 29.04.2002
(51) Int. Cl.: B64D 25/14

(54) **Dispositif d'évacuation rapide, pour aéronef**
Schnelle Evakuationseinheit für ein Luftfahrzeug
Fast evacuation device for aircraft

(30) Priorité: 02.05.2001 FR 0105867
(43) Date de publication de la demande: 06.11.2002
(73) Titulaire: AIRBUS France, 31060 Toulouse (FR)
(72) Inventeur: Baderspach, Jérôme, 31200 Toulouse (FR); Rondot, Sébastien, 31400 Toulouse (FR); Costecalde, Christian, 31300 Beauzelle (FR)
(74) Mandataire: Poulin, Gérard

(56) Documents cités:
- EP-A- 0 518 461
- US-A- 2 765 131
- US-A- 3 458 009
- US-A- 3 598 215

## Description

### Domaine technique

L'invention concerne un dispositif conçu pour permettre l'évacuation rapide des passagers d'un aéronef en cas de nécessité, par exemple lors d'un atterrissage d'urgence.

Un dispositif conforme à l'invention peut être utilisé sur tout type d'aéronef, et notamment sur les avions civils destinés au transport de passagers ainsi que sur les aéronefs militaires affectés au transport de troupes.

### Etat de la technique

Les avions de transport civil sont équipés pour permettre l'évacuation rapide des passagers en cas de nécessité, c'est-à-dire notamment lors d'un atterrissage d'urgence.

L'évacuation d'urgence des passagers doit pouvoir être faite sans avoir recours à des moyens extérieurs à l'avion. Lorsque les portes de l'avion au sol sont situées à une hauteur significative, il est souvent proposé d'effectuer cette évacuation à l'aide de toboggans.

Dans ce cas, les toboggans sont réalisés dans des matériaux souples, afin de pouvoir être stockés, à l'état plié, à bord de l'avion. Des boudins gonflables donnent alors aux toboggans la forme et la rigidité souhaitées, lorsqu'ils doivent être utilisés.

Pour permettre une mise en oeuvre rapide, chaque toboggan est stocké, à l'état plié, à proximité immédiate de l'issue avec laquelle il doit pouvoir être utilisé. Pour réaliser ce stockage, les emplacements utilisés actuellement sont essentiellement de deux types.

La solution la plus courante consiste à stocker le toboggan dégonflé et plié dans la cabine des passagers, près de l'issue, fréquemment à demeure contre la porte de celle-ci. Un dispositif dit "d'armement" permet, lorsqu'il est en position armée, de fixer le toboggan au seuil de porte et de déclencher le gonflage du toboggan dès l'ouverture de la porte. Lorsque ce dispositif est en position désarmée, le dispositif d'armement autorise l'ouverture de la porte sans gonfler le toboggan, pour permettre l'embarquement et le débarquement des passagers dans des conditions normales.

Le stockage des toboggans dans la cabine des passagers présente l'inconvénient d'occuper un volume non négligeable, qui réduit d'autant l'espace disponible à l'intérieur de la cabine et peut, dans certains cas, entraîner une gêne pour les passagers et l'équipage.

De plus, lorsque le toboggan est implanté sur la porte, il alourdit celle-ci, ce qui complique sa conception et sa manipulation. En outre, cette implantation impose la présence d'un système complexe d'accrochage déconnectable du toboggan au seuil de l'issue.

Une autre solution connue consiste à stocker le toboggan replié dans un logement situé dans une zone non pressurisée, en dehors de la cabine des passagers. Un tel logement peut être situé sur le dessus de l'aile, pour être utilisé conjointement avec les issues de secours qui surplombent l'aile. Comme l'illustre le document EP-A-0 518 461, le logement dans lequel est stocké le toboggan replié peut aussi être aménagé sous la cabine des passagers, juste en dessous de la porte. Ce logement est rigide et étanche vis-à-vis des zones pressurisées de l'avion. Il comporte, sur sa face tournée vers l'extérieur de l'avion, une ouverture normalement fermée par une trappe qui assure la continuité aérodynamique du fuselage.

Cette solution permet d'éviter les problèmes découlant de l'implantation du toboggan à l'intérieur de la cabine. Cependant, il n'est pas possible de stocker le toboggan dans la voilure lorsque l'issue est éloignée de celle-ci.

Par ailleurs, l'implantation d'un logement non pressurisé dans le fuselage, lui-même pressurisé, s'avère une solution pénalisante en termes de masse, en particulier lorsque les dimensions du logement sont importantes.

De plus le toboggan situé en zone non pressurisée est soumis à des cycles de variations de pression et de température défavorables, qui induisent des opérations de maintenance préventive plus importantes que lorsqu'il est implanté en zone pressurisée.

Le document US-A-2 765 131 décrit en référence à la figure 8 un dispositif d'évacuation rapide d'aéronef conforme au préambule de la revendication 1.

### Exposé de l'invention

L'invention a précisément pour objet un dispositif d'évacuation rapide d'un aéronef, dont la conception originale est telle que l'espace disponible à l'intérieur de la cabine des passagers n'est pas réduit et que les inconvénients découlant de l'implantation d'un toboggan en zone non pressurisée sont supprimés.

Conformément à l'invention, ce résultat est obtenu au moyen d'un dispositif d'évacuation rapide d'un aéronef réalisé conformément à la revendication 1.

L'implantation du toboggan dans une zone extérieure à la cabine des passagers permet notamment de ne pas réduire l'espace disponible dans celle-ci et de simplifier la porte. De plus, du fait que le logement contenant le toboggan est situé dans une zone pressurisée, il n'existe aucun impératif pour délimiter ce logement vers l'intérieur de l'avion. Ainsi, cette délimitation peut être faite par une structure déjà présente dans l'avion ou, de préférence, par un caisson de protection du toboggan vis-à-vis des agressions diverses, par exemple mécaniques ou chimiques. Du fait qu'il ne subit pas les efforts liés à la pressurisation de l'avion, ce caisson présente alors une structure légère, même lorsque le toboggan est de très grande taille.

Pour tenir compte du fait que le toboggan est logé dans une zone pressurisée de l'aéronef, la trappe est apte à résister, en vol, à des différences de pression entre la zone pressurisée et l'extérieur de l'aéronef.

Pour la même raison, des moyens d'étanchéité sont interposés entre la trappe et une enveloppe extérieure de l'aéronef.

Ces moyens d'étanchéité peuvent notamment comprendre un joint gonflable.

Selon un premier mode de réalisation de l'invention, dit "à verrouillage réactif", des moyens élastiques sollicitent les moyens de verrouillage dans le sens du déverrouillage de la trappe, de façon à permettre l'ouverture de celle-ci lorsque la porte est ouverte et agissent sur ledit mécanisme par l'intermédiaire des moyens d'armement-désarmement, lorsque ceux-ci occupent leur état armé.

Avantageusement, le mécanisme comprend alors une tige apte à coulisser selon son axe et à tourner autour dudit axe dans un élément de structure de l'aéronef, une extrémité de ladite tige agissant sur les moyens de verrouillage à l'encontre de l'action des moyens élastiques. Dans ce cas, le mécanisme comprend en outre des moyens de butée s'opposant à un coulissement de la tige selon son axe dans le sens de l'action des moyens élastiques, lorsque la tige occupe une première position angulaire, et autorisant ledit coulissement lorsque la tige occupe une deuxième position angulaire. En outre, les moyens d'armement-désarmement agissent sur la tige pour la faire tourner autour dudit axe, entre la première position angulaire et la deuxième position angulaire, lorsque les moyens d'armement-désarmement passent de leur état désarmé à leur état armé, et inversement.

Selon un deuxième mode de réalisation, préféré, de l'invention, dit "à verrouillage actif", les moyens de verrouillage sont interposés entre la trappe et un élément de structure de l'aéronef. Le mécanisme agit alors sur la trappe de façon à la déplacer entre une première position dans laquelle les moyens de verrouillage sont verrouillés et une deuxième position dans laquelle les moyens de verrouillage sont déverrouillés, lorsque le mécanisme est relié à la porte par l'intermédiaire des moyens d'armement-désarmement.

Dans ce cas, le mécanisme comprend avantageusement une tringlerie qui agit sur la trappe par une liaison, déconnectable automatiquement lorsque la trappe occupe sa deuxième position.

De préférence, un moyen de rappel agit alors sur la tringlerie pour maintenir normalement la trappe dans sa première position.

Dans le deuxième mode de réalisation de l'invention, on donne avantageusement à la trappe une configuration de type "bouchon". A cet effet, la trappe comprend des butées aptes à être en appui contre des butées complémentaires liées à une structure d'encadrement de la trappe, sous l'action des différences de pression qui existent, en vol, entre la zone pressurisée et l'extérieur de l'aéronef, lorsque la trappe occupe sa première position.

### Brève description des dessins

On décrira à présent, à titre d'exemples illustratifs et non limitatifs, différents modes de réalisation de l'invention, en se référant aux dessins annexés, dans lesquels :
- la figure 1 est une vue en coupe transversale illustrant un premier mode de réalisation d'un dispositif d'évacuation rapide d'aéronef conforme à l'invention, intégrant des moyens de verrouillage dits "réactifs" de la trappe d'évacuation du toboggan ;
- la figure 2 est une vue en coupe selon la ligne II-II de la figure 1 ;
- la figure 3 est une vue comparable à la figure 1, illustrant un deuxième mode de réalisation, préféré, d'un dispositif d'évacuation rapide selon l'invention, intégrant des moyens de verrouillage dits "actifs" de la trappe ; et
- la figure 4 est une vue en coupe transversale montrant des éléments complémentaires du dispositif de la figure 3.

### Description détaillée de plusieurs modes de réalisation de l'invention

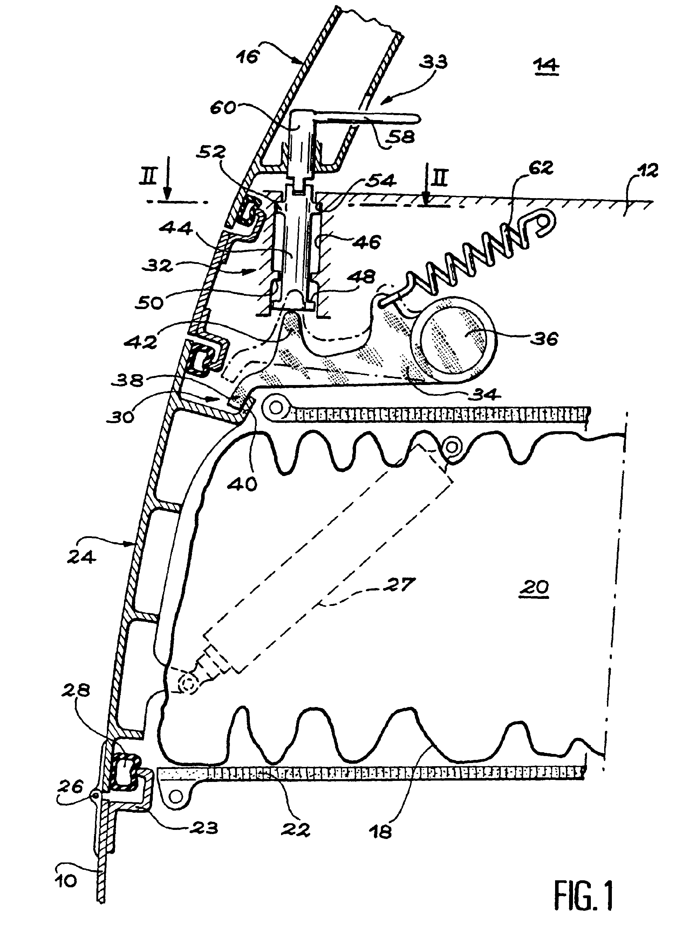

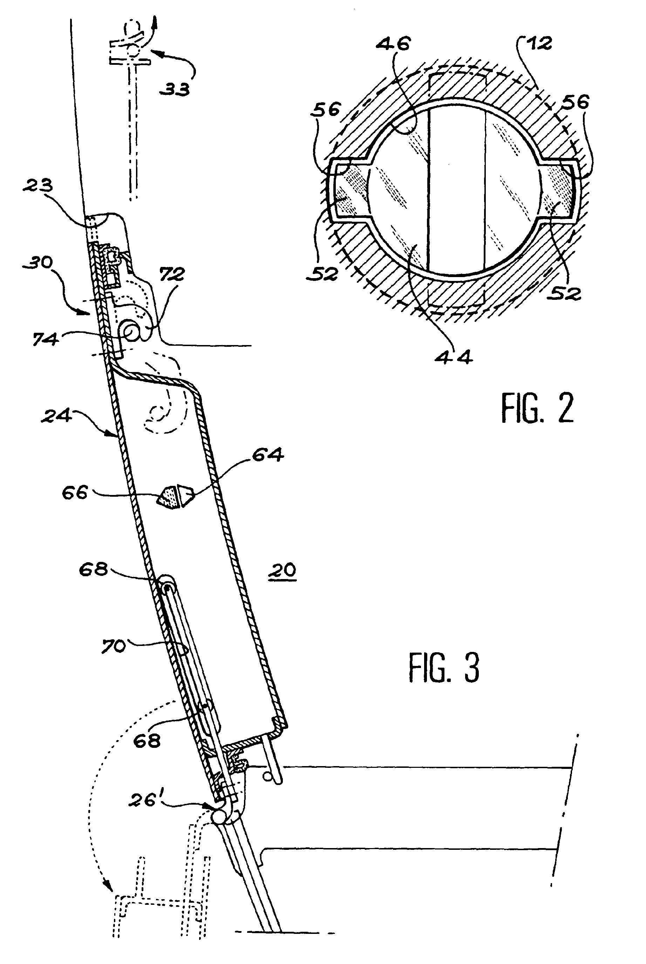

Un premier mode de réalisation d'un dispositif d'évacuation rapide conforme à l'invention va être décrit en se référant aux figures 1 et 2.

Sur la figure 1, on a représenté, en coupe transversale, une partie latérale de la paroi 10 du fuselage d'un aéronef, ainsi qu'une partie attenante du plancher 12 de la cabine pressurisée 14 destinée à recevoir les passagers. Plus précisément, la partie de la paroi 10 du fuselage représentée sur la figure 1 comporte une ouverture normalement fermée par une porte d'accès 16 dont seule la partie basse est visible. Cette ouverture permet aux passagers d'accéder à la cabine 14 lorsque l'avion est au sol. Elle constitue également une issue de secours, en cas de nécessité. La paroi 10 et le plancher 12 appartiennent l'un et l'autre à la structure de l'aéronef. Ils constituent à eux deux la paroi délimitant la cabine 14 apte à recevoir les passagers.

Conformément à l'invention, un toboggan gonflable 18 est stocké, à l'état dégonflé, dans un logement 20 aménagé dans une zone pressurisée de l'aéronef, extérieure à la paroi délimitant la cabine 14. La forme et les dimensions du logement 20 sont adaptées à celles du toboggan 18.

Dans le mode de réalisation illustré sur la figure 1, le logement 20 est placé dans le fuselage 10, en dessous du plancher 12 et de la porte 16. En variante, il peut toutefois être situé dans tout autre emplacement localisé en zone pressurisée et placé à proximité immédiate d'une issue.

Etant donné que le logement 20 est situé dans une zone pressurisée, il n'a pas besoin d'être délimité vers l'intérieur de l'aéronef par des cloisons épaisses aptes à résister aux fortes contraintes mécaniques appliquées sur les pièces qui séparent les zones pressurisées des zones non pressurisées. Par conséquent, le logement 20 n'a pas besoin d'être délimité par une structure renforcée à l'intérieur de l'aéronef.

Toutefois, dans le mode de réalisation représenté sur la figure 1, le logement 20 recevant le toboggan 18 à l'état plié est délimité, à l'intérieur de l'aéronef, par un caisson de protection 22 de structure légère. Ce caisson 22 a pour fonction de protéger le toboggan 18 vis-à-vis des agressions de toute nature telles que les agressions mécaniques dues, par exemple, à des aspérités ou à des corps étrangers et les agressions chimiques pouvant avoir pour origine les ruissellements naturels, les produits d'entretien, les fumées, etc..

Comme l'illustre schématiquement la figure 1, le logement 20 est délimité, vers l'extérieur de l'aéronef, par une trappe 24. Dans les conditions normales, la trappe 24 est fermée et obture de façon étanche une ouverture prévue dans la paroi 10 du fuselage. Cette ouverture est délimitée par un cadre 23 et située en dessous de la porte 16, dans le mode de réalisation représenté. La surface extérieure de la trappe 24 assure alors la continuité aérodynamique du fuselage de l'aéronef. En outre, la trappe 24 est conçue pour résister, pendant le vol, aux différences de pression qui existent alors entre le logement 20 en zone pressurisée et l'extérieur de l'aéronef.

Les dimensions de l'ouverture normalement fermée par la trappe 24 tiennent compte des dimensions du toboggan 18 qui devra être déployé, des contraintes de place dans le fuselage et des impératifs d'installation d'autres systèmes présents à l'intérieur du fuselage. Comme on l'a déjà observé, ces impératifs peuvent conduire à réaliser le logement 20 à un autre emplacement par rapport à la porte d'accès 16, sous réserve que cet emplacement permette de déployer le toboggan 18 en dessous de ladite porte.

La trappe 24 peut être articulée sur la paroi 10 du fuselage de l'aéronef par des charnières 26, comme on l'a représenté sur la figure 1. Tout autre moyen d'articulation tel qu'un pantographe ou autre peut également être utilisé. En variante, la trappe 24 peut aussi être séparable du fuselage. Le choix entre ces différentes solutions est fait dans chaque cas particulier, en tenant compte notamment des critères de déploiement du toboggan 18 et des opérations de maintenance.

Dans le mode de réalisation représenté sur la figure 1, dans lequel la trappe 24 est liée à la structure de l'aéronef par des charnières 26, un ou plusieurs vérins 27, par exemple de type pneumatique, peuvent être prévus pour faciliter les mouvements de la trappe.

Lorsque la trappe 24 est fermée, des moyens d'étanchéité 28, tels qu'un joint gonflable ou non, limitent les fuites de pressurisation vers l'extérieur de l'aéronef. Plus précisément, le joint 28 est interposé entre la trappe 24 et son encadrement 23, lié à la structure de l'aéronef.

La trappe 24 est normalement maintenue en position fermée par des moyens de verrouillage 30. Un mécanisme 32 relie ces moyens de verrouillage 30 à la porte d'accès 16, par l'intermédiaire de moyens 33 d'armement-désarmement, lorsque ces moyens 33 occupent un état "armé". Au contraire, le mécanisme 32 est désolidarisé de la porte 16 lorsque les moyens 33 d'armement-désarmement occupent un état "désarmé".

De façon classique, les moyens 33 d'armement-désarmement sont prévus pour pouvoir être manoeuvrés par l'équipage depuis l'intérieur de la cabine 14 lorsque la porte d'accès 16 est fermée.

Grâce à l'agencement qui vient d'être décrit, une ouverture de la porte 16 a pour effet de déverrouiller les moyens de verrouillage 30 lorsque les moyens 33 d'armement-désarmement occupent leur état armé. Par conséquent, la trappe 24 s'ouvre automatiquement et libère le toboggan 18 sous l'action de moyens de gonflage (non représentés) associés à ce dernier, de la même manière que dans les dispositifs d'évacuation rapide de l'art antérieur. Au contraire, lorsqu'une ouverture de la porte 16 se produit alors que les moyens 33 d'armement-désarmement occupent leur état désarmé, la trappe 24 reste verrouillée en position fermée par les moyens de verrouillage 30.

Dans le mode de réalisation représenté sur la figure 1, les moyens de verrouillage 30 sont de type "réactifs". Ils sont matérialisés par un levier 34, supporté par un élément de structure de l'aéronef attenant au bord supérieur de l'encadrement 23 qui délimite l'ouverture obturée par la trappe 24.

Plus précisément, le levier 34 est monté sur ledit élément de structure par l'intermédiaire d'un axe 36, de façon à pouvoir pivoter autour d'un axe géométrique sensiblement parallèle à l'axe longitudinal de l'aéronef. Le levier 34 comporte une extrémité 38 en forme de crochet, repliée vers le bas. Cette extrémité 38 est normalement en prise sur un crochet 40, replié vers le haut et solidaire de la trappe 24, de façon à empêcher le pivotement de celle-ci vers l'extérieur de l'aéronef, c'est-à-dire dans le sens de son ouverture. Cette position, représentée en trait plein sur la figure 1, correspond à la position de verrouillage des moyens de verrouillage 30.

Le levier 34 comprend également, à proximité de son extrémité 38, une butée 42, orientée vers le haut. Cette butée 42 est en appui contre l'extrémité inférieure d'une tige verticale 44 matérialisant le mécanisme 32. La tige 44 est montée dans un élément de structure de l'aéronef, matérialisé dans ce cas par le plancher 12, de façon à pouvoir tourner et coulisser selon son axe, à l'intérieur d'un alésage 46 traversant le plancher.

Le déplacement vers le haut de la tige 44 à l'intérieur de l'alésage 46 est limité par la venue en appui de deux épaulements complémentaires 48 et 50 formés respectivement sur chacune de ces pièces.

En outre et comme le montre mieux la figure 2, la tige 44 porte au moins une clavette 52 (deux dans le mode de réalisation représenté). Les clavettes 52 sont normalement en appui contre un épaulement 54 formé dans l'alésage 46, de façon à s'opposer à une remontée de la tige 44 lorsque celle-ci occupe sa position basse, dans laquelle elle maintient le levier 34 en position verrouillée.

Comme on le voit sur la figure 2, des rainures 56 sont pratiquées dans l'alésage 46, parallèlement à son axe vertical, de façon à déboucher sur l'épaulement 54. Le nombre et l'agencement des rainures 56 sont tels que toutes les clavettes 52 peuvent être amenées simultanément en face d'une rainure 56 par une rotation de la tige 44 autour de son axe. Un déplacement vers le haut de la tige 44 et, par conséquent, un déverrouillage des moyens de verrouillage 30 sont alors possibles.

Les moyens 33 d'armement-désarmement sont matérialisés par une poignée 58, solidaire d'une tige 60, d'axe vertical, montée dans la partie basse de la porte 16 de façon à pouvoir tourner autour dudit axe. Lorsque la porte 16 est fermée, les tiges 44 et 60 sont alignées selon un même axe vertical et en appui l'une contre l'autre. De plus, l'extrémité haute de la tige 44 et l'extrémité basse de la tige 60 présentent des formes complémentaires, par exemple de type "tenon-mortaise", de façon telle que les deux tiges 44 et 60 sont alors en prise l'une sur l'autre et liées l'une à l'autre en rotation.

Grâce à l'agencement qui vient d'être décrit, lorsque la porte 16 est fermée, une manoeuvre de la poignée 58 permet de faire passer les moyens 33 d'armement-désarmement d'une position armée à une position désarmée, et inversement.

Dans la position armée, l'orientation angulaire des tiges 44 et 60 autour de leur axe commun est telle que les clavettes 52 portées par l'axe 44 se trouvent en face des rainures 56 formées dans l'alésage 46. La tige 44 est alors libre de se déplacer vers le haut lorsque la porte 16 est ouverte.

Dans la position désarmée, l'orientation angulaire des tiges 44 et 60 autour de leur axe commun est telle que les clavettes 52 sont en appui contre l'épaulement 54 formé dans l'alésage 46. Tout mouvement vers le haut de la tige 44 est alors impossible, quelle que soit la position de la porte 16.

Enfin, dans le mode de réalisation des figures 1 et 2 où les moyens de verrouillage 30 sont de type réactif, un moyen élastique matérialisé par un ressort de traction 62 est interposé entre le levier 34 et un élément de structure de l'aéronef, constitué dans ce cas par le plancher 12 de la cabine 14.

Quand la porte 16 de l'aéronef est fermée alors que les moyens 33 d'armement-désarmement occupent leur état désarmé, les clavettes 52 de l'axe 44 sont en appui contre l'épaulement 54 formé dans l'alésage 46. L'axe 44 est donc maintenu en position basse lorsqu'on procède à l'ouverture de la porte 16. Cette position permet ainsi l'embarquement et le débarquement des passagers sans risque d'ouverture de la trappe 24 puisque le levier 34 est maintenu en position verrouillée par la tige 44.

En revanche, lorsque les moyens 33 d'armement-désarmement occupent leur état armé, les clavettes 52 se trouvent en face des rainures 56 formées dans l'alésage 46. De façon connue, la cinématique d'ouverture de la porte 16 est telle qu'elle se déplace d'abord vers le haut, puis sensiblement parallèlement à la paroi 10 du fuselage, avant de s'écarter progressivement de celui-ci en dégageant l'ouverture formée dans la paroi. En raison de cette cinématique, la tige 44 est libérée dès le début de l'ouverture de la porte 16. Par conséquent, le levier 34 se déplace vers le haut sous l'action du ressort de traction 62. Cela a pour effet de dégager du crochet 40 l'extrémité 38 du levier 34. Les moyens de gonflage (non représentés) du toboggan 18 assurent alors l'ouverture de la trappe 24 ainsi libérée et le déploiement du toboggan à l'extérieur de l'aéronef, en dessous de la porte 16.

Quelle que soit la position occupée par les moyens 33 d'armement-désarmement, il est à noter que la porte 16, lorsqu'elle est fermée et verrouillée, contribue au verrouillage de la trappe 24 du toboggan 18.

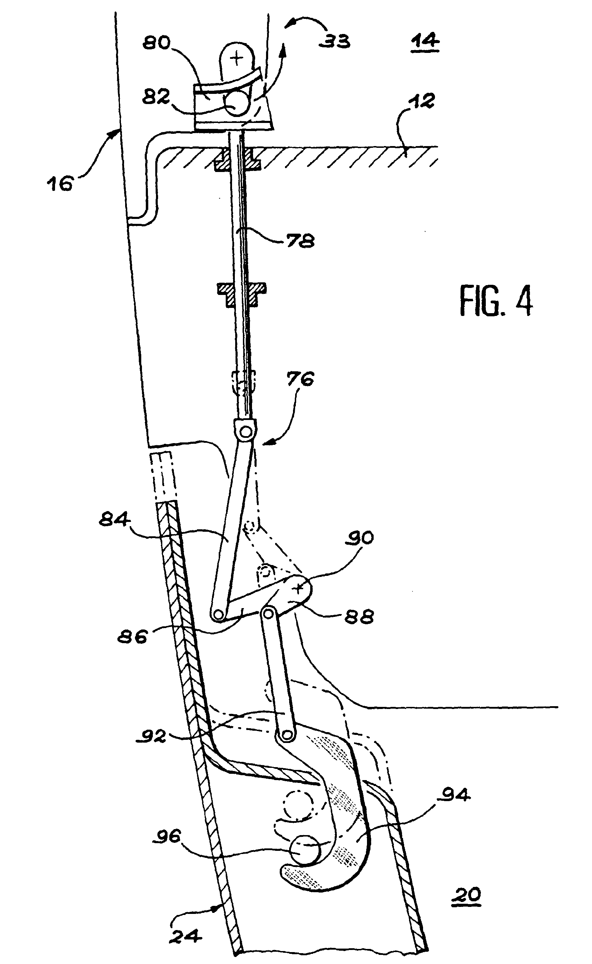

Un deuxième mode de réalisation, préféré, de l'invention va à présent être décrit en se référant aux figures 3 et 4.

Ce mode de réalisation se distingue principalement du précédent par le fait que les moyens de verrouillage 30 y sont "actifs", et non "réactifs". Cela signifie que, dans ce cas, le mouvement d'ouverture de la porte 16 commande directement le déverrouillage des moyens de verrouillage 30 de la trappe 24. En d'autres termes, il n'est pas nécessaire de prévoir des moyens élastiques comparables au ressort de traction 62 sur la figure 1 pour commander le déverrouillage de la trappe.

Une autre différence importante entre les premier et deuxième modes de réalisation de l'invention concerne le fait que, dans le deuxième mode de réalisation, la trappe 24 du toboggan est de type "bouchon". En d'autres termes, la trappe 24 comporte des butées 64, l'encadrement 23 comporte des butées 66 et ces butées 64 et 66 sont en appui mutuel lorsque la trappe est fermée, les butées 64 de la trappe étant situées vers l'intérieur de l'aéronef par rapport aux butées 66. Ainsi, la différence de pression qui existe en vol entre l'intérieur du fuselage, où est situé le logement 20, pressurisé et l'extérieur de l'aéronef tend à plaquer les butées 64 et 66 les unes contre les autres.

Dans le mode de réalisation illustré sur les figures 3 et 4, la trappe 24 est articulé sur le bas de l'encadrement 23 par des charnières coulissantes 26'. En plus du fait qu'elles permettent un pivotement de la trappe 24 autour d'un axe sensiblement parallèle à l'axe longitudinal de l'aéronef, les charnières coulissantes 26' autorisent un déplacement vers le haut de la trappe 24 à partir de sa position basse verrouillée illustrée en trait plein sur la figure 3.

A cet effet, la branche de la charnière 26' qui porte la trappe 24 est munie de galets 68, reçus dans une rainure de guidage 70 formée dans la trappe. Bien entendu, tout autre mécanisme connu de l'homme du métier, permettant d'obtenir ce double mouvement de pivotement et de coulissement, peut être utilisé sans sortir du cadre de l'invention.

Comme l'illustre la figure 3, les moyens de verrouillage 30 comprennent, dans ce cas, au moins un crochet de verrouillage 72, solidaire de la trappe 24, ainsi qu'un ou plusieurs galets 74, solidaires de l'encadrement 23. Les crochets de verrouillage 72 sont ouverts vers le bas, de façon à coiffer les galets 74 lorsque la trappe 24 occupe sa position basse verrouillée. Les crochets de verrouillage 72 ainsi que les butées 64 et 66 empêchent alors toute ouverture de la trappe 24.

On a représenté sur la figure 4 l'un des modes de réalisation possibles d'un mécanisme de relevage 76 reliant dans ce cas la trappe 24 à la porte 16 au travers des moyens 33 d'armement-désarmement, lorsque ceux-ci occupent leur état armé.

Dans ce cas, le mécanisme de relevage 76 comprend une tige 78 supportée de façon coulissante par un élément de structure de l'aéronef, tel que le plancher 12 de la cabine 14, selon une direction sensiblement verticale. A son extrémité haute, la tige 78 porte une glissière 80, orientée selon une direction sensiblement horizontale.

La glissière 80 est apte à recevoir un doigt mobile 82 (par exemple, coulissant) lié mécaniquement à la porte 16. Le doigt mobile 82 est commandé directement par les moyens 33 d'armement-désarmement qui équipent la porte 16. Ainsi, lorsque les moyens 33 occupent leur état armé, le doigt 82 est reçu dans la glissière 80. La tige 78 est alors liée en translation à la porte lors d'un déplacement vertical de celle-ci. Au contraire, lorsque les moyens 33 d'armement-désarmement occupent leur état désarmé, le doigt 82 est à l'extérieur de la glissière 80 et il n'existe pas de liaison entre la porte 16 et la tige 78.

A son extrémité inférieure, la tige 78 est articulée à l'extrémité haute d'une première bielle 84, dont l'extrémité basse est elle-même articulée sur un premier levier 86. Ce premier levier 86 est solidaire d'un deuxième levier 88 et tous deux sont montés pivotants sur un élément de structure de l'aéronef, tel que le plancher 12 de la cabine 14, autour d'un axe 90 sensiblement parallèle au plan du plancher 12. Une deuxième bielle 92 est articulée à son tour, par son extrémité haute, sur le deuxième levier 88. Enfin, l'extrémité inférieure de la deuxième bielle 92 porte un crochet de levage 94 à son extrémité inférieure. Ce crochet de levage 94 est normalement placé en dessous d'un galet horizontal 96 solidaire de la trappe 24, lorsque celle-ci est en position basse, tel qu'illustré en trait plein sur la figure 4.

Les éléments 78, 84, 86, 88 et 92 constituent une tringlerie reliant la glissière 80 au crochet 94. Par ailleurs, le crochet de levage 94 et le galet 96 forment une liaison entre cette tringlerie et la trappe 24. Cette liaison est déconnectable automatiquement lorsque la trappe 24 est en position haute.

Dans l'agencement qui vient d'être décrit, lorsque les moyens 33 d'armement-désarmement occupent leur état armé, le déplacement de la porte 16 vers le haut qui se produit au début de son ouverture a pour effet un déplacement simultané, également vers le haut, de la trappe 24.

Lors du déplacement vers le haut de la porte 16, l'ensemble constitué par les bielles 84 et 92 et les leviers 86 et 88 réduit l'amplitude du mouvement transmis au crochet de levage 94 par la tige 78. Plus précisément, dans le mode de réalisation représenté où la longueur du levier 86 est double de celle du levier 88, le crochet de levage 94 se déplace sur une distance égale à la moitié du déplacement de la tige 78. Par conséquent, le déplacement vers le haut de la porte 16 est double de celui de la trappe 24.

Bien entendu, cela ne constitue qu'un exemple de réalisation, nullement limitatif de la portée de l'invention. De façon plus générale, le rapport entre les déplacements de la porte 16 et de la trappe 24 peut être quelconque et notamment égal à un. Dans ce dernier cas, la tige 78 agit directement sur le crochet de levage 94 par son extrémité inférieure.

Le déplacement vers le haut de la trappe 24, qui découle de l'ouverture de la porte 16 lorsque le doigt 82 se trouve dans la glissière 80 (état armé), a pour effet de dégager les crochets de verrouillage 72 des galets 74 (figure 3) et de dégager les butées 64 par rapport aux butées 66. Par conséquent, la trappe 24 s'ouvre ensuite automatiquement notamment sous l'effet du gonflage du toboggan. Il est à noter que l'ouverture de la trappe est également rendue possible par le fait que le crochet de levage 94 dont l'extrémité est placée sous le galet 96 et est ouvert en direction du mouvement d'ouverture de la trappe. Le toboggan se déploie alors sous la porte 16 pour permettre l'évacuation d'urgence des passagers.

Lorsque le doigt 82 est à l'extérieur de la glissière 80 (état désarmé), l'ouverture de la porte 16 est sans effet sur la trappe 24. Celle-ci reste donc dans sa position basse illustrée en trait plein sur les figures 3 et 4, dans laquelle la trappe reste verrouillée par les crochets de verrouillage 72, en prise sur les galets 74.

Le deuxième mode de réalisation de l'invention qui vient d'être décrit en se référant aux figures 3 et 4 est préféré au premier car il permet de commander directement un déverrouillage positif de la trappe du toboggan en manoeuvrant la porte d'accès à la cabine, sans avoir recours à un moyen élastique annexe tel qu'un ressort.

Bien entendu, l'invention n'est pas limitée aux modes de réalisation qui viennent d'être décrits à titre d'exemples. Ainsi et uniquement à titre d'exemple, dans le deuxième mode de réalisation décrit en référence aux figures 3 et 4, l'ensemble constitué par le crochet de levage 94 et le galet 96 peut être remplacé par tout autre mécanisme permettant de soulever la trappe 24 avec la porte 16 lorsque les moyens 33 d'armement-désarmement sont désarmés, sans s'opposer ensuite à l'ouverture de la trappe et de la porte. De surcroît, un ressort de faible capacité peut agir sur la tige 78 afin de la maintenir en position basse dans les conditions d'ouverture normales de la porte 16.

## Revendications

1. Dispositif d'évacuation rapide d'un aéronef comprenant une structure dont une paroi (10, 12) délimite une cabine (14) apte à recevoir des passagers, au moins une ouverture formée dans la paroi (10, 12) et une porte d'accès (16) apte à fermer ladite ouverture, le dispositif d'évacuation rapide comportant un logement (20) prévu dans ladite structure, à proximité de la porte (16), un toboggan gonflable (18) placé dans le logement (20), une trappe (24) fermant le logement (20) vers l'extérieur de l'aéronef, et des moyens (30, 32, 76) pour commander une ouverture automatique de la trappe (24) comprenant des moyens de verrouillage (30) de la trappe (24) en position fermée, dans lequel le logement (20) est situé dans une zone pressurisée de l'aéronef, extérieure à la paroi (10, 12) délimitant la cabine (14), le dispositif étant **caractérisé en ce qu'**il comprend de plus des moyens (33) d'armement-désarmement du toboggan (18) et **en ce que** les moyens pour commander une ouverture automatique de la trappe comprennent un mécanisme (32, 76) reliant lesdits moyens de verrouillage (30) à la porte (16) par l'intermédiaire des moyens (33) d'armement-désarmement, lorsque ceux-ci occupent un état armé, ledit mécanisme (32, 76) étant désolidarisé de la porte (16) lorsque les moyens (33) d'armement-désarmement occupent un état désarmé, de façon à commander une ouverture automatique de la trappe (24), lors d'une ouverture de la porte (16), lorsque les moyens (33) d'armement-désarmement occupent leur état armé.

2. Dispositif d'évacuation rapide selon la revendication 1, dans lequel le logement (20) est délimité, vers l'intérieur de l'aéronef, par un caisson de protection (22) apte à s'opposer à des agressions mécaniques ou chimiques.

3. Dispositif d'évacuation rapide selon l'une quelconque des revendications 1 et 2, dans lequel la trappe (24) est apte à résister, en vol, à des différences de pression entre la zone pressurisée et l'extérieur de l'aéronef.

4. Dispositif d'évacuation rapide selon l'une quelconque des revendications 1 à 3, dans lequel des moyens d'étanchéité (28) sont interposés entre la trappe (24) et une enveloppe extérieure (10) de l'aéronef.

5. Dispositif d'évacuation rapide selon la revendication 4, dans lequel les moyens d'étanchéité (28) comprennent un joint gonflable.

6. Dispositif d'évacuation rapide selon l'une quelconque des revendications 1 à 5, dans lequel des moyens élastiques (62) sollicitent les moyens de verrouillage (30) dans le sens du déverrouillage de la trappe (24), de façon à permettre l'ouverture de celle-ci lorsque la porte (16) est ouverte et agissent sur ledit mécanisme (32) par l'intermédiaire des moyens (33) d'armement-désarmement, lorsque ceux-ci occupent leur état armé.

7. Dispositif selon la revendication 6, dans lequel ledit mécanisme (32) comprend une tige (44) apte à coulisser selon son axe et à tourner autour dudit axe dans un élément de structure (12) de l'aéronef, une extrémité de ladite tige (44) agissant sur les moyens de verrouillage (34) à l'encontre de l'action des moyens élastiques (62), le mécanisme (32) comprenant en outre des moyens de butée (52, 54) s'opposant à un coulissement de la tige (44) selon son axe dans le sens de l'action des moyens élastiques (62), lorsque la tige (44) occupe une première position angulaire, et autorisant ledit coulissement lorsque la tige (44) occupe une deuxième position angulaire, les moyens (33) d'armement-désarmement agissant sur la tige (44) pour la faire tourner autour dudit axe, entre la première position angulaire et la deuxième position angulaire, lorsque les moyens (33) d'armement-désarmement passent de leur état désarmé à leur état armé, et inversement.

8. Dispositif d'évacuation rapide selon l'une quelconque des revendications 1 à 5, dans lequel les moyens de verrouillage (30) sont interposés entre la trappe (24) et un élément de structure (74) de l'aéronef, ledit mécanisme (72) agissant sur la trappe (24) de façon à la déplacer entre une première position dans laquelle les moyens de verrouillage (30) sont verrouillés et une deuxième position dans laquelle les moyens de verrouillage (30) sont déverrouillés, lorsque le mécanisme (72) est relié à la porte (16) par l'intermédiaire des moyens (33) d'armement-désarmement.

9. Dispositif d'évacuation rapide selon la revendication 8, dans lequel ledit mécanisme (72) comprend une tringlerie (78, 84, 86, 88, 92)agissant sur la trappe (24) par une liaison (94, 96), déconnectable automatiquement lorsque la trappe (24) occupe sa deuxième position.

10. Dispositif d'évacuation rapide selon la revendication 9, dans lequel un moyen de rappel agit sur la tringlerie pour maintenir normalement la trappe (24) dans sa première position.

11. Dispositif d'évacuation rapide selon l'une quelconque des revendications 8 à 10, dans lequel la trappe (24) comprend des butées (64) aptes à être en appui contre des butées complémentaires (66) liées à une structure d'encadrement (23) de la trappe (24), sous l'action des différences de pression qui existent, en vol, entre la zone pressurisée et l'extérieur de l'aéronef, lorsque la trappe (24) occupe sa première position.

## Claims

1. Fast aircraft evacuation device comprising a structure having one wall (10, 12) delimiting a passenger cabin (14), at least one opening formed in the wall (10, 12) and an access door (16) which can close said opening, the fast evacuation device incorporating a housing (20) provided in said structure close to the door (16), an inflatable slide (18) placed in the housing (20), a hatch (24) closing the housing (20) on the outside of the aircraft, and means (30, 32, 76) for controlling an automatic opening of the hatch (24) comprising means (30) for locking the hatch (24) in the closed position, in which the housing (20) is located in a pressurised area of the aircraft outside the wall (10, 12) defining the cabin (14), said device being **characterized in that** it also comprises means (33) for arming-disarming the slide (18) and **in that** the means for controlling an automatic opening of the hatch comprise a mechanism (32, 76) linking said locking means (30) with door (16) by the arming-disarming means (33) when the latter occupy an armed state, said mechanism (32, 76) being disengaged from the door (16) when the arming-disarming means (33) occupy a disarmed state, so as to control an automatic opening of the hatch (24) during an opening of door (16), when the arming-disarming means (33) occupy their armed state.

2. Fast evacuation device according to claim 1, in which the housing (20) is delimited on the inside of the aircraft by a protection compartment (22) capable of resisting mechanical or chemical aggression.

3. Fast evacuation device according to either of claims 1 and 2, in which the hatch (24) is capable of resisting pressure differences in flight between the pressurised volume and the outside of the aircraft.

4. Fast evacuation device according to any one of claims 1 to 3, in which leak tightness means (28) are inserted between the hatch (24) and an external skin (10) of the aircraft.

5. Fast evacuation device according to claim 4, in which the leak tightness means (28) comprise an inflatable seal.

6. Fast evacuation device according to any one of the claims 1 to 5, in which the elastic means (62) apply forces to the locking means (30) in the direction to unlock the hatch (24) so that the hatch can be opened when the door (16) is open, and acting on the said mechanism (32) through the arming-disarming means (33) when these means are in their armed state.

7. Device according to claim 6, in which the said mechanism (32) comprises a rod (44) capable of sliding along its axis and rotating about the said axis in a structural element (12) of the aircraft, one end of the said rod (44) acting on the locking means (34) opposing action of the elastic means (62), the mechanism (32) also comprising stop means (52, 54) opposing sliding of the rod (44) along its axis along the direction of action of the elastic means (62) when the rod (44) is in a first angular position, and enabling the said sliding when the rod (44) is in a second angular position, the arming-disarming means (33) acting on the rod (44) to make it rotate about the said axis between the first angular position and the second angular position when the arming-disarming means (33) change from their disarmed state to their armed state, and vice versa.

8. Fast evacuation device according to any one of the claims 1 to 5, in which the locking means (30) are inserted between the hatch (24) and a structural element (74) of the aircraft, the said mechanism (72) acting on the hatch (24) so as to move it between a first position in which the locking means (30) are locked and a second position in which the locking means (30) are unlocked, when the mechanism (72) is connected to the door (16) through arming-disarming means (33).

9. Fast evacuation device according to claim 8, in which the said mechanism (72) comprises a linkage (78, 84, 86, 88, 92) acting on the hatch (24) through a connection (94, 96) that is automatically disconnectable when the hatch (24) is in its second position.

10. Fast evacuation device according to claim 9, in which a return means acts on the linkage to keep the hatch (24) in its first position under normal conditions.

11. Fast evacuation device according to any one of claims 8 to 10, in which the hatch (24) comprises stops (64) that come into contact with complementary stops (66) connected to a frame structure (23) of the hatch (24), under the action of the pressure differences that exist in flight between the pressurised volume and outside the aircraft when the hatch (24) is in its first position.

## Patentansprüche

1. Schnellevakuierungsvorrichtung eines Luftfahrzeugs, umfassend eine Struktur, von der eine Wand (10,12) eine Kabine (14) zur Aufnahme der Passagiere begrenzt, mindestens eine in der Wand (10,12) ausgebildete Öffnung und eine Zugangstür (16), welche die Öffnung verschließen kann, wobei die Schnellevakuierungsvorrichtung einen in der Struktur in Nähe der Tür (16) vorgesehenen Sitz (20) aufweist, eine in dem Sitz (20) angeordnete aufblasbare Rutsche (18), eine den Sitz (20) vom Flugzeug nach außen schließende Falltür (24) sowie Mittel (30,32,76) zum Steuern einer automatischen Öffnung der Falltür (24) Verriegelungsmittel (30) der Falltür (24) in geschlossener Position umfasst, aufweist, wobei der Sitz (20) sich in einer druckbeaufschlagten Zone des Luftfahrzeugs außerhalb der die Kabine (14) begrenzenden Wand (10,12) befindet, wobei die Vorrichtung **dadurch gekennzeichnet ist, dass** sie außerdem Lade-/Freigabemittel der Rutsche (18) umfasst und dass die Mittel zum Steuern einer automatischen Öffnung der Falltür einen Mechanismus (32,76) aufweisen, der die Verriegelungsmittel (30) mit der Tür (16) über Lade-/Freigabemittel (33) verbindet, wenn diese einen geladenen Zustand einnehmen, wobei der Mechanismus (32,76) von der Tür (16) entkoppelt wird, wenn die Lade-/Freigabemittel (33) einen freigegebenen Zustand einnehmen, so dass eine automatische Öffnung der Falltür (24) beim Öffnen der Tür (16) gesteuert wird, wenn die Lade-/Freigabemittel (33) ihren geladenen Zustand einnehmen.

2. Schnellevakuierungsvorrichtung nach Anspruch 1, wobei der Sitz (20) gegenüber dem Innenraum des Luftfahrzeugs durch ein Schutzgehäuse (22) begrenzt ist, das mechanischen oder chemischen Aggressionen widersteht.

3. Schnellevakuierungsvorrichtung nach einem der Ansprüche 1 oder 2, wobei die Falltür (24) im Flug Druckunterschieden zwischen der druckbeaufschlagten Zone und dem Luftfahrzeug-Außenraum widerstehen kann.

4. Schnellevakuierungsvorrichtung nach einem der Ansprüche 1 bis 3, wobei Dichtungsmittel (28) zwischen die Falltür (24) und eine äußere Ummantelung (10) des Luftfahrzeugs eingefügt sind.

5. Schnellevakuierungsvorrichtung nach Anspruch 1, wobei die Dichtungsmittel (28) eine aufblasbare Dichtung aufweisen.

6. Schnellevakuierungsvorrichtung nach einem der Ansprüche 1 bis 5, wobei elastische Mittel (62) die Verriegelungsmittel (30) in der Richtung der Entriegelung der Falltür (24) vorbelasten, um die Öffnung derselben zu ermöglichen, wenn die Tür (16) geöffnet wird, und die auf den Mechanismus (32) über die Lade-/Freigabemittel (33) einwirken, wenn diese ihren geladenen Zustand einnehmen.

7. Vorrichtung nach Anspruch 6, wobei der Mechanismus (32) eine Stange (44) aufweist, die sich entlang ihrer Achse verschieben kann und sich um die Achse in einem Strukturelement (12) des Luftfahrzeugs drehen kann, wobei ein Ende der Stange (44) auf die Verriegelungsmittel (34) entgegen der Wirkung der elastischen Mittel (62) einwirkt, der Mechanismus (32) außerdem Anschlagmittel (52,54) umfasst, die sich einer Verschiebung der Stange (44) entlang ihrer Achse in der Wirkungsrichtung der elastischen Mittel (62) entgegenwirken, wenn die Stange (44) eine erste Winkelposition einnimmt, und die Verschiebung gestatten, wenn die Stange (44) eine zweite Winkelposition einnimmt, wobei die Lade-/Freigabemittel (33) auf die Stange (44) einwirken, um sie um die Achse zwischen der ersten Winkelposition und der zweiten Winkelposition drehen zu lassen, wenn die Lade-/Freigabemittel (33) aus ihrem freigegebenen Zustand in ihren geladenen Zustand übergehen und umgekehrt.

8. Schnellevakuierungsvorrichtung nach einem der Ansprüche 1 bis 5, wobei die Verriegelungsmittel (30) zwischen die Falltür (24) und ein Strukturelement (74) des Luftfahrzeugs eingefügt sind, wobei der Mechanismus (72) auf die Falltür (24) so einwirkt, dass er sie zwischen einer ersten Position, in der die Verriegelungsmittel (30) verriegelt sind, und einer zweiten Position, in der die Verriegelungsmittel (30) entriegelt sind, verschiebt, wenn der Mechanismus (72) mit der Tür (16) über die Lade-/Freigabemittel (33) verbunden ist bzw. wird.

9. Schnellevakuierungsvorrichtung nach Anspruch 8, wobei der Mechanismus (72) ein Gestänge (78,84,86,88,92) aufweist, das auf die Falltür (24) über eine Verbindung (94,96) einwirkt, die automatisch trennbar ist, wenn die Falltür (24) ihre zweite Position einnimmt.

10. Schnellevakuierungsvorrichtung nach Anspruch 9, wobei ein Rückstellmittel auf das Gestänge einwirkt, um die Falltür (24) normalerweise in ihrer ersten Position zu halten.

11. Schnellevakuierungsvorrichtung nach einem der Ansprüche 8 bis 10, wobei die Falltür (24) Anschläge (64) umfasst, die gegen komplementäre Anschläge (66) zur Anlage kommen können, welche mit einer Umrahmungsstruktur (23) der Falltür (24) verbunden sind, und zwar unter der Einwirkung der beim Flug existierenden Druckunterschiede zwischen der druckbeaufschlagten Zone und dem Luftfahrzeug-Außenraum, wenn die Falltür (24) ihre erste Position einnimmt.
